# EUROPÄISCHE PATENTSCHRIFT

(11) **EP 1 629 165 B1**
(45) Veröffentlichungstag und Bekanntmachung des Hinweises auf die Patenterteilung: **27.06.2007**
(21) Anmeldenummer: 04726136.7
(22) Anmeldetag: 07.04.2004
(51) Int. Cl.: E05B 19/04, E05B 49/00, E05B 65/12, G07C 9/00

(54) **SCHLÜSSELSYSTEM FÜR EIN KRAFTFAHRZEUG**
KEY SYSTEM FOR A MOTOR VEHICLE
SYSTEME DE CLE POUR VEHICULE

(30) Priorität: 21.05.2003 DE 10322853
(43) Veröffentlichungstag der Anmeldung: 01.03.2006
(73) Patentinhaber: Volkswagen Aktiengesellschaft, 38436 Wolfsburg (DE)
(72) Erfinder: BALKO, Peter, 38118 Braunschweig (DE); MEYER, Dieter, 38442 Wolfsburg (DE); PLOTT, Peter, 38448 Wolfsburg (DE); ANDERS, Axel, 38557 Osloss (DE); LAMMEL, Ulrich, 38126 Braunschweig (DE); HOFMANN, Gustav, 38114 Braunschweig (DE)
(74) Vertreter: Banzer, Hans-Jörg
(86) Internationale Anmeldenummer: PCT/EP2004/003717
(87) Internationale Veröffentlichungsnummer: WO 2004/104333

(56) Entgegenhaltungen:
- EP-A- 0 987 389
- EP-A- 1 207 255
- EP-A- 1 283 315
- DE-A- 19 505 190
- US-B1- 6 460 386

## Beschreibung

Die Erfindung betrifft ein Schlüsselsystem für ein Kraftfahrzeug mit einer in einem Gehäuse angeordneten Sendeelektronik zum berührungslosen Ver- und/oder Entriegeln einer Tür des Kraftfahrzeuges und/oder zum Betrieb des Kraftfahrzeuges sowie mit einem Notschlüssel zum mechanisch erfolgenden Ver- und/oder Entriegeln der Tür des Kraftfahrzeuges und/oder zum Betrieb des Kraftfahrzeuges.

Die DE 195 05 190 A beschreibt einen elektronischen Schlüssel zur Betätigung eines Schlosses, wobei ein Gehäuse des elektronischen Schlüssels eine Aufnahme für einen Schlüsselbart für ein mechanisches Schloss aufweist. Dabei existiert bei einer Ausführungsform ein Hebel, welcher eine Öffnung enthält, um einen herausgenommenen (abgetrennten) mechanischen Schlüssel an einem Schlüsselbund anzuhängen. Des Weiteren existiert bei einer anderen Ausführungsform eine Öffnung, an welcher der elektronische Schlüssel insgesamt oder auch nur der mechanische Schlüssel festgemacht werden kann.

Die EP-A-1 207 255 betrifft ein mechanisches Modul für einen Schlüssel, der einen Körper und einen an diesen Schlüsselkörper zwischen einer Gebrauchstellung und einer Staustellung schwenkbar gelagerten Schlüssel enthält, einen Schlüssel, welcher mit diesem mechanischen Modul ausgestattet ist und ein Verfahren zum Montieren eines solchen Schlüssels.

Es ist Aufgabe der Erfindung, ein derartiges Schlüsselsystem zu verbessern.

Vorgenannte Aufgabe wird durch ein Schlüsselsystem für ein Kraftfahrzeug mit einer in einem Gehäuse angeordneten Sendeelektronik zum berührungslosen Ver- und/oder Entriegeln einer Tür des Kraftfahrzeuges und/oder zum Betrieb des Kraftfahrzeuges sowie einem Notschlüssel zum mechanisch erfolgenden Ver- und/oder Entriegeln der Tür des Kraftfahrzeuges und/oder zum Betrieb des Kraftfahrzeuges gelöst, wobei der Notschlüssel (im wesentlichen) vollständig in das Gehäuse aufnehmbar (und vorteilhafterweise in dieser Position einrastbar) ist. Dabei ist der Notschlüssel in einer ersten Rastposition und in einer von der ersten Rastposition verschiedenen zweiten Rastposition in dem Gehäuse arretierbar.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt. Eine Tür (eines Kraftfahrzeuges) im Sinne der Erfindung kann insbesondere eine Tür, eine Heck- oder Frontklappe oder ein Kofferraumdeckel sein. Ein zum mechanisch erfolgenden Betrieb des Kraftfahrzeuges ausgebildeter Notschlüssel in Sinne der Erfindung entspricht insbesondere einem mechanischen Zündschlüssel.

Zur im wesentlichen vollständigen Aufnehmbarkeit des Notschlüssels in das Gehäuse des Schlüsselsystems ist der Notschlüssel in vorteilhafter Ausgestaltung der Erfindung im wesentlichen vollständig in einen Rand des Gehäuses aufnehmbar.

In weiterhin vorteilhafter Ausgestaltung der Erfindung sind der Notschlüssel und das Gehäuse vollständig voneinander trennbar. Dass der Notschlüssel und das Gehäuse vollständig voneinander trennbar sind, bedeutet im Sinne der Erfindung insbesondere, dass der Notschlüssel und das Gehäuse zerstörungsfrei und auch ohne Werkzeug vollständig voneinander trennbar sind. D.h. insbesondere, dass der Notschlüssel und das Gehäuse zum Benutzen des Notschlüssels ohne Aufwand vollständig voneinander trennbar sind.

In weiterhin vorteilhafter Ausgestaltung der Erfindung ist der Notschlüssel zur Aufnahme für einen Schlüsselring ausgebildet.

In weiterhin vorteilhafter Ausgestaltung der Erfindung weist der Notschlüssel einen Schließkörper zum mechanisch erfolgenden Ver- und/oder Entriegeln der Tür des Kraftfahrzeuges und/oder zum Betrieb des Kraftfahrzeuges und einen zur Aufnahme eines Schlüsselringes geeigneten Aufnahmekörper auf. Der Schließkörper und der Aufnahmekörper sind dabei in weiterhin vorteilhafter Ausgestaltung der Erfindung beweglich, vorteilhafterweise mittels eines Gelenkes, insbesondere mittels eines Scharniers, miteinander verbunden.

In weiterhin vorteilhafter Ausgestaltung der Erfindung weist der Schließkörper bzw. der Notschlüssel ein Schließstück zum mechanisch erfolgenden Ver- und/oder Entriegeln der Tür des Kraftfahrzeuges und/oder zum Betrieb des Kraftfahrzeuges und einen Einschubkörper auf, in den das Schließstück einschiebbar ist.

In weiterhin vorteilhafter Ausgestaltung der Erfindung weist der Notschlüssel einen zur Aufnahme eines Schlüsselringes geeigneten Aufnahmekörper auf.

In weiterhin vorteilhafter Ausgestaltung der Erfindung sind der Einschubkörper und der Aufnahmekörper beweglich, vorteilhafterweise mittels eines Gelenkes, insbesondere mittels eines Scharniers, miteinander verbunden.

Der Notschlüssel ist in weiterhin vorteilhafter Ausgestaltung der Erfindung in der ersten Rastposition im wesentlichen vollständig in das Gehäuse aufgenommen und vorteilhafterweise in der zweiten Rastposition - insbesondere gerade nur - soweit in das Gehäuse aufgenommen, dass der Aufnahmekörper für einen Schlüsselring (zum Zweck des Einfädelns) erreichbar ist.

In weiterhin vorteilhafter Ausgestaltung der Erfindung ist der Notschlüssel in der zweiten Rastposition - insbesondere gerade nur - soweit in das Gehäuse aufgenommen, dass der Aufnahmekörper schwenkbar ist.

In weiterhin vorteilhafter Ausgestaltung der Erfindung ist der Notschlüssel in der zweiten Rastposition - insbesondere gerade nur - soweit in das Gehäuse aufgenommen, dass (nur) der Schließkörper im wesentlichen in das Gehäuse aufgenommen ist.

In weiterhin vorteilhafter Ausgestaltung der Erfindung ist der Notschlüssel bei Lösen der zweiten Rastposition in das Gehäuse einschiebbar.

In weiterhin vorteilhafter Ausgestaltung der Erfindung ist der Notschlüssel bei Lösen in der zweiten Rastposition von dem Gehäuse trennbar.

In weiterhin vorteilhafter Ausgestaltung der Erfindung weist das Schlüsselsystem einen Druckknopf zum Lösen der zweiten Rastposition auf.

Es kann vorgesehen sein, dass das Gehäuse ein zur Aufnahme eines Schlüsselringes geeignetes Aufnahmeelement aufweist. Das Aufnahmeelement kann beweglich mit dem Gehäuse verbunden und zumindest in eine Schließposition, in der das Aufnahmeelement eine geschlossene Einheit mit dem Gehäuse bildet, sowie in eine Einfädelposition anordbar sein, in der ein Schlüsselring in das Aufnahmeelement einfädelbar ist.

Vorgenannte Aufgabe wird zudem durch ein Schlüsselsystem für ein Kraftfahrzeug mit einer in einem Gehäuse angeordneten Sendeelektronik zum berührungslosen Ver- und/oder Entriegeln einer Tür des Kraftfahrzeuges und/oder zum Betrieb des Kraftfahrzeuges gelöst, wobei das Gehäuse ein zur Aufnahme eines Schlüsselringes geeignetes Aufnahmeelement aufweist, das beweglich mit dem Gehäuse verbunden ist und zumindest in eine Schließposition, in der das Aufnahmeelement eine geschlossene Einheit mit dem Gehäuse bildet, sowie in eine Einfädelposition anordbar ist, in der ein Schlüsselring in das Aufnahmeelement einfädelbar ist.

In vorteilhafter Ausgestaltung der Erfindung weist das Schlüsselsystem einen Notschlüssel zum mechanisch erfolgenden Ver- und/oder Entriegeln der Tür des Kraftfahrzeuges und/oder Betrieb des Kraftfahrzeuges auf, wobei der Notschlüssel zumindest z. T., vorteilhafterweise im wesentlichen vollständig, in das Gehäuse aufnehmbar ist.

Weitere Vorteile und Einzelheiten ergeben sich aus der nachfolgenden Beschreibung von Ausführungsbeispielen. Dabei zeigen:
- Fig. 1: ein Ausführungsbeispiel eines Schlüsselsystems in einer ersten Arretierposition,
- Fig. 2: das Ausführungsbeispiel des Schlüsselsystems gemäß Fig. 1 in einer zweiten Arretierposition,
- Fig. 3: das Ausführungsbeispiel des Schlüsselsystems gemäß Fig. 1 mit einem von einem Gehäuse getrennten Notschlüssel,
- Fig. 4: das Ausführungsbeispiel des Schlüsselsystems gemäß Fig. 1 in einer ersten Arretierposition in dreidimensionaler Darstellung,
- Fig. 5: das Ausführungsbeispiel des Schlüsselsystems gemäß Fig. 1 in einer zweiten Arretierposition in dreidimensionaler Darstellung,
- Fig. 6: das Ausführungsbeispiel des Schlüsselsystems gemäß Fig. 1 in einer zweiten Arretierposition in dreidimensionaler Darstellung,
- Fig. 7: ein Ausführungsbeispiel eines Notschlüssels,
- Fig. 8: ein weiteres Ausführungsbeispiel eines Schlüsselsystems,
- Fig. 9: das Ausführungsbeispiel des Schlüsselsystems gemäß Fig. 8 mit einem Schlüsselring,
- Fig. 10: das Ausführungsbeispiel des Schlüsselsystems gemäß Fig. 8 in dreidimensionaler Darstellung,
- Fig. 11: das Ausführungsbeispiel des Schlüsselsystems gemäß Fig. 9 in dreidimensionaler Darstellung,
- Fig. 12: ein weiteres Ausführungsbeispiel eines Schlüsselsystems,
- Fig. 13: das Ausführungsbeispiel des Schlüsselsystems gemäß Fig. 12 in einem geöffneten Zustand,
- Fig. 14: das Ausführungsbeispiel des Schlüsselsystems gemäß Fig. 12 mit einem eingefädelten Schlüsselring,
- Fig. 15: das Ausführungsbeispiel des Schlüsselsystems gemäß Fig. 12 in dreidimensionaler Darstellung,
- Fig. 16: das Ausführungsbeispiel des Schlüsselsystems gemäß Fig. 13 in dreidimensionaler Darstellung,
- Fig. 17: das Ausführungsbeispiel des Schlüsselsystems gemäß Fig. 14 in dreidimensionaler Darstellung,
- Fig. 18: ein weiteres Ausführungsbeispiel eines Schlüsselsystems in dreidimensionaler Darstellung,
- Fig. 19: das Ausführungsbeispiel des Schlüsselsystems gemäß Fig. 18 in einem geöffneten Zustand,
- Fig. 20: das Ausführungsbeispiel des Schlüsselsystems gemäß Fig. 18 in einem geschlossenem Zustand mit einem eingefädelten Schlüsselring,
- Fig. 21: ein weiteres Ausführungsbeispiel eines Schlüsselsystems,
- Fig. 22: das Ausführungsbeispiel des Schlüsselsystems gemäß Fig. 21 in einem geöffneten Zustand in dreidimensionaler Darstellung,
- Fig. 23: das Ausführungsbeispiel des Schlüsselsystems gemäß Fig. 21 in einem geöffneten Zustand,
- Fig. 24: das Ausführungsbeispiel des Schlüsselsystems gemäß Fig. 21 in einem geschlossenen Zustand mit einem eingefädelten Schlüsselring und
- Fig. 25: das Ausführungsbeispiel des Schlüsselsystems gemäß Fig. 21 in einem halbgeöffneten Zustand.

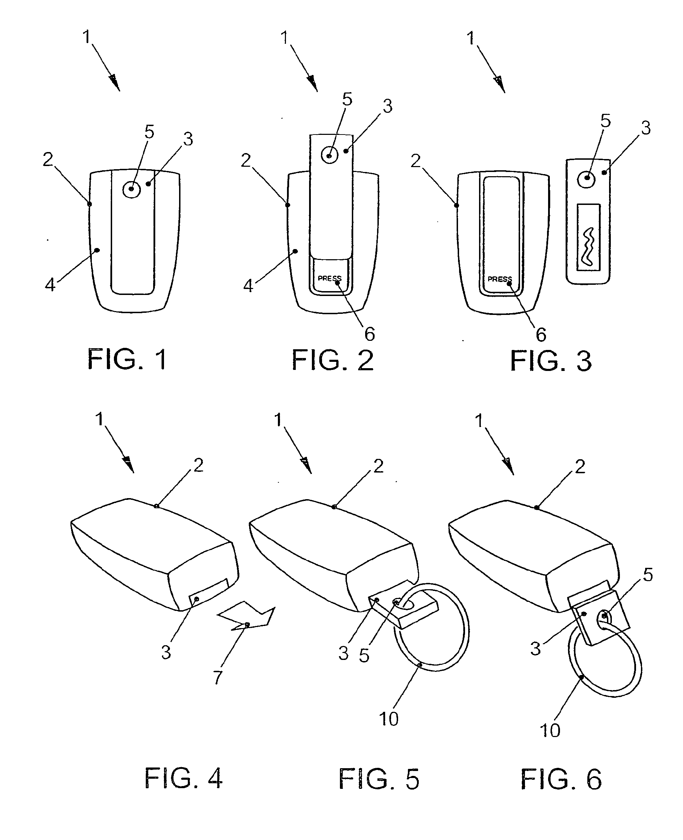

Fig. 1 zeigt ein Ausführungsbeispiel für ein sich in einer ersten Arretierposition befindendes Schlüsselsystem 1 für ein Kraftfahrzeug mit einer in einem Gehäuse 2 angeordneten Sendeelektronik zum berührungslosen Ver- und/oder Entriegeln einer Tür des Kraftfahrzeuges und/oder zum Betrieb des Kraftfahrzeuges sowie mit einem Notschlüssel 3 zum mechanisch erfolgenden Ver- und/oder Entriegeln der Tür des Kraftfahrzeuges und/oder zum Betrieb des Kraftfahrzeuges. Der Notschlüssel 3 ist vollständig im oberen Rand 4 des Gehäuses 2 aufgenommen. Der Notschlüssel 3 weist eine Öffnung 5 auf, in die - wie in Fig. 5 und Fig. 6 dargestellt - ein Schlüsselring 10 einfädelbar ist.

Der Notschlüssel 3 ist - wie in Fig. 2 dargestellt - z. T. aus dem Gehäuse 2 in eine zweite Arretierposition herausschiebbar. In dieser zweiten Arretierposition, ist in die Öffnung 5 - wie in Fig. 5 und Fig. 6 dargestellt - ein Schlüsselring 10 einfädelbar. Zudem gibt der Notschlüssel in der zweiten Arretierposition einen Druckknopf 6 frei. Durch Drücken des Druckknopfes 6 wird ein Rastmechanismus im Gehäuse 2 gelöst, so dass das Gehäuse 2 und der Notschlüssel trennbar sind und zwei separate Gegenstände bilden können, wie dies in Fig. 3 dargestellt ist.

Fig. 4, Fig. 5 und Fig. 6 zeigen das Schlüsselsystem 1 in dreidimensionaler Darstellung. In Fig. 4 ist das Schlüsselsystem 1 in seiner ersten Arretierposition dargestellt. Der Pfeil 7 deutet an, dass der Notschlüssel 3 (teilweise) aus dem Gehäuse 2 in eine zweite Arretierposition schiebbar ist. Fig. 5 und Fig. 6 zeigen das Schlüsselsystem 1 in seiner zweiten Arretierposition, wobei durch die Öffnung 5 ein Schlüsselring 10 eingefädelt ist.

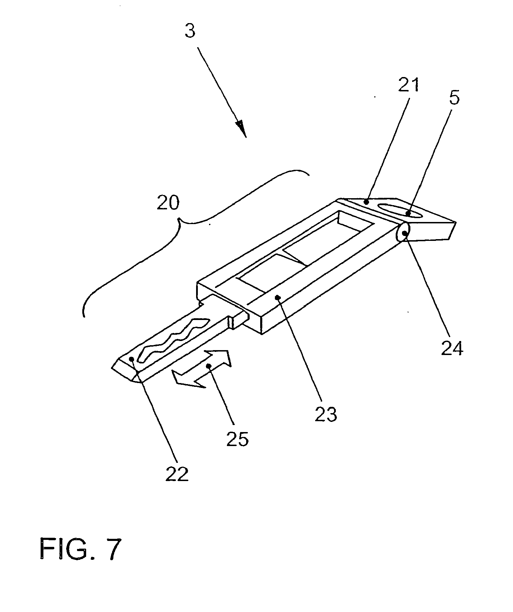

Fig. 7 zeigt den Notschlüssel 3 in dreidimensionaler Darstellung. Der Notschlüssel 3 weist einen Schließkörper 20 mit einem Schließstück 22 zum mechanisch erfolgenden Ver- und/oder Entriegeln der Tür des Kraftfahrzeuges und/oder zum Betrieb des Kraftfahrzeuges und mit einen Einschubkörper 23 auf, in den das Schließstück 22 - wie durch den Doppelpfeil 25 angedeutet - ein- und ausschiebbar ist. Der Einschubkörper 23 ist über ein Scharnier 24 mit einem Aufnahmekörper 21 kippbar verbunden. Auf diese Weise lässt sich die Verletzungsgefahr bei einem Unfall verringern. In Fig. 6 ist der Aufnahmekörper 21 des bis zu der zweiten Arretierposition in das Gehäuse 2 eingeschobenen Notschlüssels 3 abgeklappt. In dem Aufnahmekörper 21 ist die Öffnung 5 angeordnet.

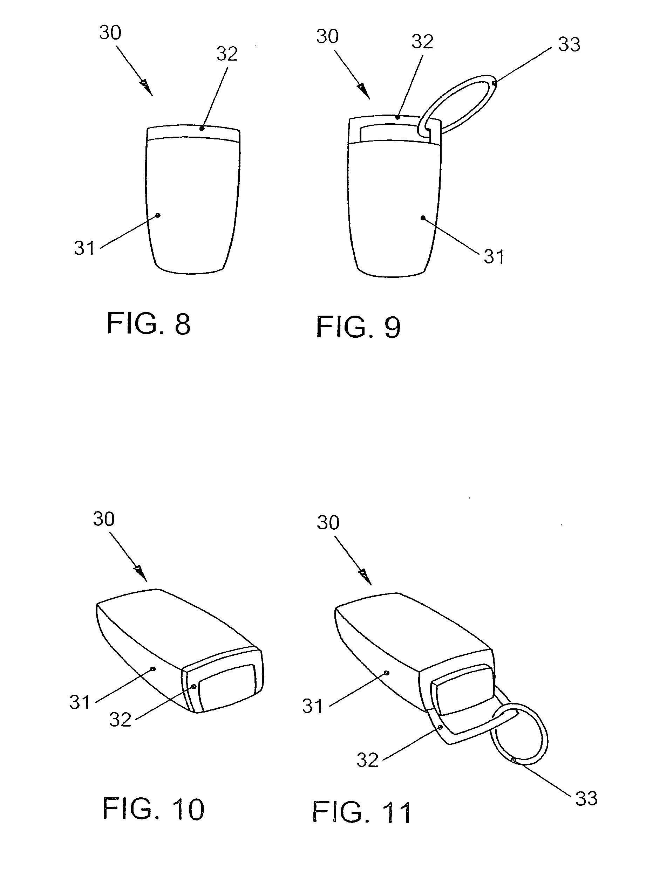

Fig. 8 zeigt ein weiteres Ausführungsbeispiel eines Schlüsselsystems 30 für ein Kraftfahrzeug, Fig. 9 zeigt das Ausführungsbeispiel des Schlüsselsystems 30 gemäß Fig. 8 mit einem Schlüsselring 33, Fig. 10 zeigt das Ausführungsbeispiel des Schlüsselsystems 30 gemäß Fig. 8 in dreidimensionaler Darstellung, und Fig. 11 zeigt das Ausführungsbeispiel des Schlüsselsystems 30 gemäß Fig. 9 in dreidimensionaler Darstellung. Das Schlüsselsystem 30 weist eine in einem Gehäuse 31 angeordnete Sendeelektronik zum berührungslosen Ver- und/oder Entriegeln einer Tür des Kraftfahrzeuges und/oder zum Betrieb des Kraftfahrzeuges sowie ein zur Aufnahme des Schlüsselringes 33 geeignetes bügelförmiges Aufnahmeelement 32 auf, das beweglich mit dem Gehäuse 31 verbunden ist.

In der in Fig. 8 und Fig. 10 gezeigten Position schließt das bügelförmige Aufnahmeelement 32 bündig mit der Oberfläche des Gehäuses 31 ab, so dass es nicht über die Grundform des Gehäuses 31 hinausragt. Das bügelförmige Aufnahmeelement 32 kann - wie in Fig. 9 und Fig. 11 dargestellt - abgeklappt werden, so dass der Schlüsselring 33 in das Aufnahmeelement einfädelbar ist.

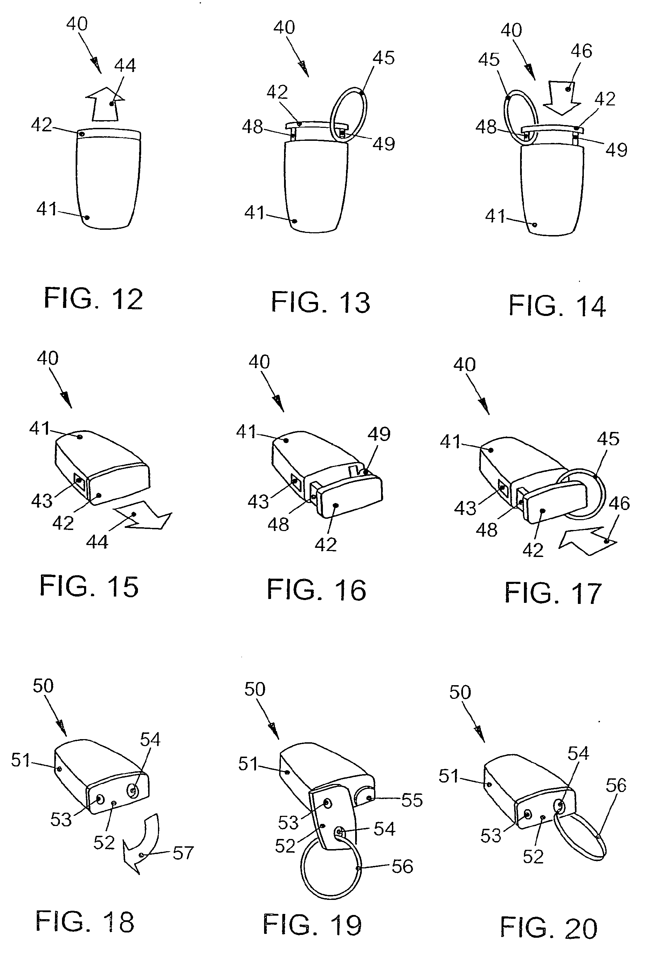

Fig. 12 zeigt ein weiteres Ausführungsbeispiel eines Schlüsselsystems 40, Fig. 13 zeigt das Ausführungsbeispiel des Schlüsselsystems 40 gemäß Fig. 12 in einem geöffneten Zustand, Fig. 14 zeigt das Ausführungsbeispiel des Schlüsselsystems 40 gemäß Fig. 12 mit einem eingefädelten Schlüsselring 45, Fig. 15 zeigt das Ausführungsbeispiel des Schlüsselsystems 40 gemäß Fig. 12 in dreidimensionaler Darstellung, Fig. 16 zeigt das Ausführungsbeispiel des Schlüsselsystems 40 gemäß Fig. 13 in dreidimensionaler Darstellung jedoch aus Gründen der Übersichtlichkeit ohne den Schlüsselring 45, und Fig. 17 zeigt das Ausführungsbeispiel des Schlüsselsystems 40 gemäß Fig. 14 in dreidimensionaler Darstellung. Das Schlüsselsystem 40 weist eine in einem Gehäuse 41 angeordnete Sendeelektronik zum berührungslosen Ver- und/oder Entriegeln einer Tür des Kraftfahrzeuges und/oder zum Betrieb des Kraftfahrzeuges sowie ein zur Aufnahme des Schlüsselringes 45 geeignetes Aufnahmeelement 42 auf, das beweglich mit dem Gehäuse 41 verbunden ist.

In der in Fig. 12 und Fig. 15 gezeigten Position deckt das Aufnahmeelement 42 bündig eine Stirnfläche des Gehäuses 41 ab. Das Gehäuse weist einen Druckknopf 43 auf. Wird der Druckknopf 43 gedrückt, wird das Aufnahmeelement 42 in Richtung des Pfeils 44 in eine in Fig. 13 und Fig. 16 gezeigte Position bewegt. Das Aufnahmeelement 42 weist einen langen Haltestift 48, der in Fig. 13 und Fig. 16 gezeigten Position das Aufnahmeelement 42 mit dem Gehäuse 41 verbindet, und einen kurzen Haltestift 49 auf. In dieser Position kann der Schlüsselring 45 - wie in Fig. 13 gezeigt - zwischen dem Gehäuse 41 und dem kurzen Haltestift 49 eingefädelt werden.

Nach dem Einfädeln der Schlüsselringes 45 kann das Aufnahmeelement 42 in Richtung des Pfeils 46 auf das Gehäuse 41 zu bewegt werden, so dass sowohl der lange Haltestift 48 als der kurze Haltestift 49 das Aufnahmeelement 42 mit dem Gehäuse 41 verbinden und der Schlüsselring 45 eingeschlossen ist.

Fig. 18 zeigt ein weiteres Ausführungsbeispiel eines Schlüsselsystems 50 in dreidimensionaler Darstellung. Das Schlüsselsystem 50 weist eine in einem Gehäuse 51 angeordnete Sendeelektronik zum berührungslosen Ver- und/oder Entriegeln einer Tür eines Kraftfahrzeuges und/oder zum Betrieb des Kraftfahrzeuges sowie ein zur Aufnahme eines Schlüsselringes 56 geeignetes Aufnahmeelement 52 mit einer Öffnung 54 auf. Das Aufnahmeelement 52 ist mittels eines Stiftes 53 in Richtung des Pfeils 57 schwenkbar mit dem Gehäuse 51 verbunden.

Fig. 19 zeigt das Schlüsselsystem 50 in einem geöffneten Zustand, d.h. nach Schwenken des Aufnahmeelementes 52. In diesem Zustand kann der Schlüsselring 56 in die Öffnung 54 eingefädelt werden. Nach Einfädeln des Schlüsselringes 56 kann das Aufnahmeelement 52 zurückgeschwenkt werden, wobei für den Schlüsselring 56 an dem Gehäuse 51 eine Aussparung 55 vorgesehen ist. Fig. 20 zeigt das Schlüsselsystem 50 in diesem erneut geschlossenem Zustand mit dem eingefädelten Schlüsselring 56.

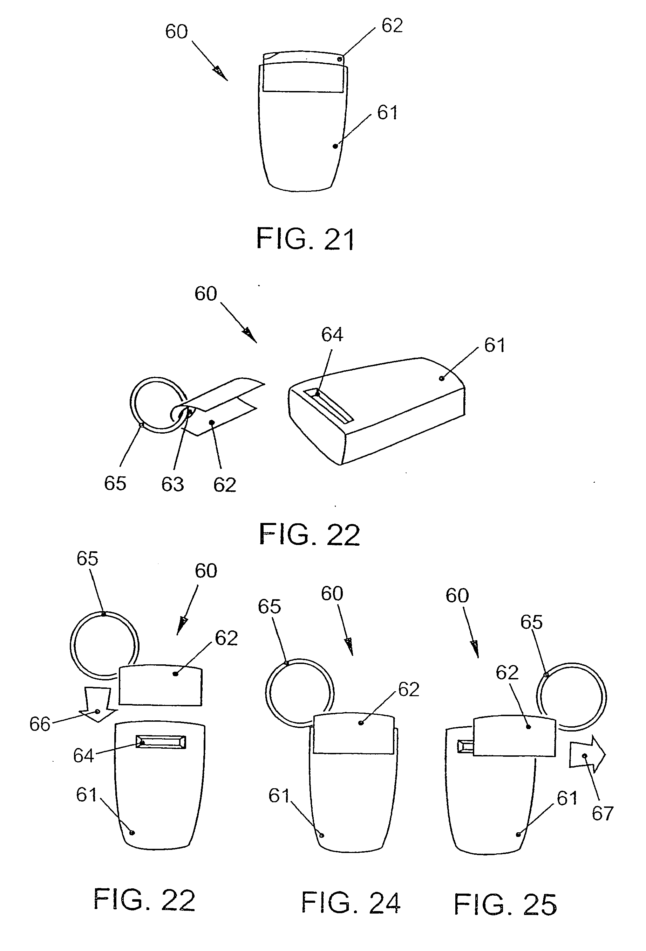

Fig. 21 zeigt ein weiteres Ausführungsbeispiel eines Schlüsselsystems 60. Das Schlüsselsystem 60 weist eine in einem Gehäuse 61 angeordnete Sendeelektronik zum berührungslosen Ver- und/oder Entriegeln einer Tür eines Kraftfahrzeuges und/oder zum Betrieb des Kraftfahrzeuges sowie ein zur Aufnahme eines Schlüsselringes 65 geeignetes von dem Gehäuse 61 abnehmbares Aufnahmeelement 62 auf. Fig. 22 zeigt das Schlüsselsystem 60 in dreidimensionaler Darstellung, wobei das Aufnahmeelement 62 von dem Gehäuse 61 getrennt ist. Das Aufnahmeelement 62 weist eine Öffnung 63 auf, durch die der Schlüsselring 65 eingefädelt ist.

Das Gehäuse 61 weist eine Vertiefung 64 auf, in die das Aufnahmeelement 62 einrasten kann, wenn es - wie in Fig. 23 gezeigt - in Richtung des Pfeils 66 auf das Gehäuse 61 geschoben wird. Fig. 24 zeigt das Schlüsselsystem 60 in einem geschlossenem Zustand, d.h. nachdem das Aufnahmeelement 62 auf das Gehäuse 61 geschoben worden ist, mit dem eingefädelten Schlüsselring 65.

Fig. 25 zeigt das Schlüsselsystem 60 in einem halbgeöffneten Zustand. Durch Verschieben des Aufnahmeelementes 62 gegenüber dem Gehäuse 61 in Richtung des Pfeils 67 kann das Aufnahmeelement 62 von dem Gehäuse 61 getrennt werden.

Die Schlüsselsysteme 30, 40, 50 bzw. 60 weisen je einen nicht dargestellten Notschlüssel zum mechanisch erfolgenden Ver- und/oder Entriegeln der Tür des Kraftfahrzeuges und/oder Betrieb des Kraftfahrzeuges auf, wobei der Notschlüssel zumindest z. T., vorteilhafterweise im wesentlichen vollständig, in die Gehäuse 31, 41, 51 bzw. 61 aufnehmbar ist.

Insbesondere in Verbindung mit den Schlüsselsystemen 30, 40, 50 bzw. 60 kann vorgesehen sein, die Gehäuse 31, 41, 51 bzw. 61 zumindest zweiteilig, also aus zumindest zwei Teilen, auszuführen, wobei die beiden Teile des Gehäuses 31, 41, 51 bzw. 61 durch Auseinanderklappen das Öffnen des Gehäuses 31, 41, 51 bzw. 61 erlauben oder vollständig voneinander trennbar sind. Dass die beiden Teile des Gehäuses 31, 41, 51 bzw. 61 vollständig voneinander trennbar sind, bedeutet im Sinne der Erfindung insbesondere, dass die beiden Teile des Gehäuses 31, 41, 51 bzw. 61 zerstörungsfrei und auch ohne Werkzeug vollständig voneinander trennbar sind. D.h. insbesondere, dass die beiden Teile des Gehäuses 31, 41, 51 bzw. 61 für einen Bebnutzer des Schlüssels ohne Aufwand vollständig voneinander trennbar sind. Ist das Gehäuse 31, 41, 51 bzw. 61 geöffnet, so kann ein Notschlüssel entnommen werden.

### BEZUGSZEICHENLISTE

- 1,30, 40, 50, 60: Schlüsselsystem
- 2, 31, 41, 51, 61: Gehäuse
- 3,: Notschlüssel
- 4: oberer Rand
- 5,54,:
- 63: Öffnung
- 6, 43: Druckknopf
- 7, 44, 46, 57, 66, 67: Pfeil
- 10, 33, 45, 56, 65: Schlüsselring
- 23: Einschubkörper
- 21: Aufnahmekörper
- 22: Schließstück
- 25: Doppelpfeil
- 24: Scharnier
- 20: Schließkörper
- 32, 42, 52, 62: Aufnahmeelement
- 48: langer Haltestift
- 49: kurzer Haltestift
- 53: Stift
- 55: Aussparung
- 64: Vertiefung

## Patentansprüche

1. Schlüsselsystem (1) für ein Kraftfahrzeug mit einer in einem Gehäuse (2) angeordneten Sendeelektronik zum berührungslosen Ver- und/oder Entriegeln einer Tür des Kraftfahrzeuges und/oder zum Betrieb des Kraftfahrzeuges sowie mit einem Notschlüssel (3) zum mechanisch erfolgenden Ver- und/oder Entriegeln der Tür des Kraftfahrzeuges und/oder zum Betrieb des Kraftfahrzeuges, **dadurch gekennzeichnet, dass** der Notschlüssel (3) im wesentlichen vollständig in das Gehäuse (2) aufnehmbar ist und der Notschlüssel (3) in einer ersten Rastposition und in einer von der ersten Rastposition verschiedenen zweiten Rastposition in dem Gehäuse (2) arretierbar ist.

2. Schlüsselsystem (1) nach Anspruch 1, **dadurch gekennzeichnet, dass** der Notschlüssel (3) im wesentlichen vollständig in einen Rand (4) des Gehäuses (2) aufnehmbar ist.

3. Schlüsselsystem (1) nach Anspruch 1, oder 2, **dadurch gekennzeichnet, dass** der Notschlüssel (3) und das Gehäuse (2) vollständig voneinander trennbar sind.

4. Schlüsselsystem (1) nach einem der vorhergehenden Ansprüche, **dadurch gekennzeichnet, dass** der Notschlüssel (3) zur Aufnahme eines Schlüsselringes (10) ausgebildet ist.

5. Schlüsselsystem (1) nach einem der vorhergehenden Ansprüche, **dadurch gekennzeichnet, dass** der Notschlüssel (3) einen Schließkörper (20) zum mechanisch erfolgenden Ver- und/oder Entriegeln der Tür des Kraftfahrzeuges und/oder zum Betrieb des Kraftfahrzeuges und einen zur Aufnahme eines Schlüsselringes (10) geeigneten Aufnahmekörper (21) aufweist.

6. Schlüsselsystem (1) nach Anspruch 5 **dadurch gekennzeichnet, dass** der Schließkörper (20) und der Aufnahmekörper (21) beweglich miteinander verbunden sind.

7. Schlüsselsystem (1) nach Anspruch 5 oder 6, **dadurch gekennzeichnet, dass** der Schließkörper (20) und der Aufnahmekörper (21) mittels eines Gelenkes (24) miteinander verbunden sind.

8. Schlüsselsystem (1) nach einem der Ansprüche 1 bis 4, **dadurch gekennzeichnet, dass** der Notschlüssel (3) ein Schließstück (22) zum mechanisch erfolgenden Ver- und/oder Entriegeln der Tür des Kraftfahrzeuges und/oder zum Betrieb des Kraftfahrzeuges und einen Einschubkörper (23) aufweist, in den das Schließstück (22) einschiebbar ist.

9. Schlüsselsystem (1) nach Anspruch 8, **dadurch gekennzeichnet, dass** der Notschlüssel (3) einen zur Aufnahme eines Schlüsselringes (10) geeigneten Aufnahmekörper (21) aufweist.

10. Schlüsselsystem (1) nach Anspruch 9, **dadurch gekennzeichnet, dass** der Einschubkörper (23) und der Aufnahmekörper (21) beweglich miteinander verbunden sind.

11. Schlüsselsystem (1) nach Anspruch 9 oder 10, **dadurch gekennzeichnet, dass** der Einschubkörper (23) und der Aufnahmekörper (21) mittels eines Gelenkes (24) miteinander verbunden sind.

12. Schlüsselsystem (1) nach einem der vorhergehenden Ansprüche, **dadurch gekennzeichnet, dass** der Notschlüssel (3) in der ersten Rastposition in wesentlichen vollständig in das Gehäuse (2) aufgenommen ist.

13. Schlüsselsystem (1) nach einem der vorhergehenden Ansprüche, **dadurch gekennzeichnet, dass** der Notschlüssel (3) in der zweiten Rastposition soweit in das Gehäuse (2) aufgenommen ist, dass der Aufnahmekörper (21) zum Einfädeln eines Schlüsselringes erreichbar ist.

14. Schlüsselsystem (1) nach einem der vorhergehenden Ansprüche, **dadurch gekennzeichnet, dass** der Notschlüssel (3) in der zweiten Rastposition soweit in das Gehäuse (2) aufgenommen ist, dass der Aufnahmekörper (21) schwenkbar ist.

15. Schlüsselsystem (1) nach einem der vorhergehenden Ansprüche, **dadurch gekennzeichnet, dass** der Notschlüssel (3) in der zweiten Rastposition soweit in das Gehäuse (2) aufgenommen ist, dass der Schließkörper (20) im wesentlichen in das Gehäuse (2) aufgenommen ist.

16. Schlüsselsystem (1) nach einem der vorhergehenden Ansprüche, **dadurch gekennzeichnet, dass** der Notschlüssel (3) bei Lösen der zweiten Rastposition in das Gehäuse (2) einschiebbar ist.

17. Schlüsselsystem (1) nach einem der vorhergehenden Ansprüche, **dadurch gekennzeichnet, dass** der Notschlüssel (3) bei Lösen der zweiten Rastposition von dem Gehäuse (2) trennbar ist.

18. Schlüsselsystem (1) nach einem der vorhergehenden Ansprüche, **dadurch gekennzeichnet, dass** es einen Druckknopf (6) zum Lösen der zweiten Rastposition aufweist.

19. Schlüsselsystem (1) nach einem der vorhergehenden Ansprüche, **dadurch gekennzeichnet, dass** das Gehäuse (2) ein zur Aufnahme eines Schlüsselringes (33, 45, 56, 65) geeignetes Aufnahmeelement (32, 42, 52, 62) aufweist.

20. Schlüsselsystem (1) nach Anspruch 19, **dadurch gekennzeichnet, dass** das Aufnahmeelement (32, 42, 52, 62) beweglich mit dem Gehäuse (2) verbunden und zumindest in einer Schließposition, in der das Aufnahmeelement (32, 42, 52, 62) eine geschlossene Einheit mit dem Gehäuse (2) bildet, sowie in einer Einfädelposition anordbar ist, in der ein Schlüsselring (33, 45, 56, 65) in das Aufnahmeelement (32, 42, 52, 62) einfädelbar ist.

21. Schlüsselsystem (30, 40, 50, 60) für ein Kraftfahrzeug mit einer in einem Gehäuse (2) angeordneten Sendeelektronik zum berührungslosen Ver- und/oder Entriegeln einer Tür des Kraftfahrzeuges und/oder zum Betrieb des Kraftfahrzeuges, **dadurch gekennzeichnet, dass** das Gehäuse (2) ein zur Aufnahme eines Schlüsselringes (33, 45, 56, 65) geeignetes Aufnahmeelement (32, 42, 52, 62) aufweist, das beweglich mit dem Gehäuse (2) verbunden und zumindest in einer Schließposition, in der das Aufnahmeelement (32, 42, 52, 62) eine geschlossene Einheit mit dem Gehäuse (2) bildet, sowie in einer Einfädelposition anordbar ist, in der ein Schlüsselring (33, 45, 56, 65) in das Aufnahmeelement (32, 42, 52, 62) einfädelbar ist.

22. Schlüsselsystem (30, 40, 50, 60) nach Anspruch 21, **dadurch gekennzeichnet, dass** es einen Notschlüssel (3) zum mechanisch erfolgenden Ver- und/oder Entriegeln der Tür des Kraftfahrzeuges und/oder Betrieb des Kraftfahrzeuges aufweist, wobei der Notschlüssel (3) zumindest z. T. in das Gehäuse (2) aufnehmbar ist.

23. Schlüsselsystem (30, 40, 50, 60) nach Anspruch 21 oder 22, **dadurch gekennzeichnet, dass** der Notschlüssel (3) im wesentlichen vollständig in das Gehäuse (2) aufnehmbar ist.

## Claims

1. Key system (1) for a motor vehicle, with transmission electronics arranged in a housing (2) and used for the contactless locking and/or unlocking of a door of the motor vehicle and/or for operation of the motor vehicle, and with an emergency key (3) for mechanically locking and/or unlocking the door of the motor vehicle and/or for operation of the motor vehicle, **characterized in that** the emergency key (3) can be received essentially completely in the housing (2), and the emergency key (3) can be retained in the housing (2) in a first latching position and in a second latching position different from the first latching position.

2. Key system (1) according to Claim 1, **characterized in that** the emergency key (3) can be received essentially completely in an edge (4) of the housing (2).

3. Key system (1) according to Claim 1 or 2, **characterized in that** the emergency key (3) and the housing (2) can be completely separated from each other.

4. Key system (1) according to one of the preceding claims, **characterized in that** the emergency key (3) is designed to receive a key ring (10).

5. Key system (1) according to one of the preceding claims, **characterized in that** the emergency key (3) has a locking body (20) for mechanically locking and/or unlocking the door of the motor vehicle and/or for operation of the motor vehicle, and a receiving body (21) suitable for receiving a key ring (10).

6. Key system (1) according to Claim 5, **characterized in that** the locking body (20) and the receiving body (21) are connected movably to each other.

7. Key system (1) according to Claim 5 or 6, **characterized in that** the locking body (20) and the receiving body (21) are connected to each other by means of a joint (24).

8. Key system (1) according to one of Claims 1 to 4, **characterized in that** the emergency key (3) has a locking piece (22) for mechanically locking and/or unlocking the door of the motor vehicle and/or for operation of the motor vehicle, and an insert body (23) into which the locking piece (22) can be pushed.

9. Key system (1) according to Claim 8, **characterized in that** the emergency key (3) has a receiving body (21) suitable for receiving a key ring (10).

10. Key system (1) according to Claim 9, **characterized in that** the insert body (23) and the receiving body (21) are connected movably to each other.

11. Key system (1) according to Claim 9 or 10, **characterized in that** the insert body (23) and the receiving body (21) are connected to each other by means of a joint (24).

12. Key system (1) according to one of the preceding claims, **characterized in that** the emergency key (3) is received essentially completely in the housing (2) in the first latching position.

13. Key system (1) according to one of the preceding claims, **characterized in that** the emergency key (3) is received in the housing (2) in the second latching position to an extent such that the receiving body (21) can be reached in order to thread in a key ring.

14. Key system (1) according to one of the preceding claims, **characterized in that** the emergency key (3) is received in the housing (2) in the second latching position to an extent such that the receiving body (21) can be pivoted.

15. Key system (1) according to one of the preceding claims, **characterized in that** the emergency key (3) is received in the housing (2) in the second latching position to an extent such that the locking body (20) is essentially received in the housing (2).

16. Key system (1) according to one of the preceding claims, **characterized in that** the emergency key (3) can be pushed into the housing (2) when the second latching position is released.

17. Key system (1) according to one of the preceding claims, **characterized in that** the emergency key (3) can be separated from the housing (2) when the second latching position is released.

18. Key system (1) according to one of the preceding claims, **characterized in that** it has a push button (6) for releasing the second latching position.

19. Key system (1) according to one of the preceding claims, **characterized in that** the housing (2) has a receiving element (32, 42, 52, 62) suitable for receiving a key ring (33, 45, 56, 65).

20. Key system (1) according to Claim 19, **characterized in that** the receiving element (32, 42, 52, 62) is connected movably to the housing (2) and can be arranged at least in a locking position, in which the receiving element (32, 42, 52, 62) forms a closed unit with the housing (2), and in a thread-in position, in which a key ring (33, 45, 56, 65) can be threaded into the receiving element (32, 42, 52, 62).

21. Key system (30, 40, 50, 60) for a motor vehicle, with transmission electronics arranged in a housing (2) and used for the contactless locking and/or unlocking of a door of the motor vehicle and/or for operation of the motor vehicle, **characterized in that** the housing (2) has a receiving element (32, 42, 52, 62) which is suitable for receiving a key ring (33, 45, 56, 65), is connected movably to the housing (2) and can be arranged at least in a locking position, in which the receiving element (32, 42, 52, 62) forms a closed unit with the housing (2), and in a thread-in position, in which a key ring (33, 45, 56, 65) can be threaded into the receiving element (32, 42, 52, 62).

22. Key system (30, 40, 50, 60) according to Claim 21, **characterized in that** it has an emergency key (3) for mechanically locking and/or unlocking the door of the motor vehicle and/or operation of the motor vehicle, with it being possible for the emergency key (3) to be at least partially received in the housing (2).

23. Key system (30, 40, 50, 60) according to Claim 21 or 22, **characterized in that** the emergency key (3) can be received essentially completely in the housing (2).

## Revendications

1. Système de clé (1) pour un véhicule, avec une unité électronique émettrice disposée dans un boîtier (2) pour le verrouillage et/ou le déverrouillage sans contact d'une porte du véhicule et/ou pour le fonctionnement du véhicule, ainsi qu'avec une clé de secours (3) pour le verrouillage et/ou le déverrouillage mécanique de la porte du véhicule et/ou pour le fonctionnement du véhicule, **caractérisé en ce que** la clé de secours (3) peut être logée sensiblement totalement dans le boîtier (2) et la clé de secours (3) peut être bloquée dans le boîtier (2) dans une première position de crantage et dans une deuxième position de crantage différente de la première position de crantage.

2. Système de clé (1) selon la revendication 1, **caractérisé en ce que** la clé de secours (3) peut être logée sensiblement totalement dans un bord (4) du boîtier (2).

3. Système de clé (1) selon la revendication 1 ou 2, **caractérisé en ce que** la clé de secours (3) et le boîtier (2) peuvent être totalement séparés l'un de l'autre.

4. Système de clé (1) selon l'une quelconque des revendications précédentes, **caractérisé en ce que** la clé de secours (3) est conçue pour recevoir un anneau de clé (10).

5. Système de clé (1) selon l'une quelconque des revendications précédentes, **caractérisé en ce que** la clé de secours (3) présente un corps de fermeture (20) pour le verrouillage et/ou le déverrouillage mécanique de la porte du véhicule et/ou pour le fonctionnement du véhicule, et un corps récepteur (21) apte à recevoir un anneau de clé (10).

6. Système de clé (1) selon la revendication 5, **caractérisé en ce que** le corps de fermeture (20) et le corps récepteur (21) sont mutuellement reliés à déplacement.

7. Système de clé (1) selon la revendication 5 ou 6, **caractérisé en ce que** le corps de fermeture (20) et le corps récepteur (21) sont mutuellement reliés au moyen d'une articulation (24).

8. Système de clé (1) selon l'une quelconque des revendications 1 à 4, **caractérisé en ce que** la clé de secours (3) présente un élément de fermeture (22) pour le verrouillage et/ou le déverrouillage mécanique de la porte du véhicule et/ou pour le fonctionnement du véhicule, et un corps d'insertion (23) dans lequel peut être inséré l'élément de fermeture (22).

9. Système de clé (1) selon la revendication 8, **caractérisé en ce que** la clé de secours (3) présente un corps récepteur (21) apte à recevoir un anneau de clé (10).

10. Système de clé (1) selon la revendication 9, **caractérisé en ce que** le corps d'insertion (23) et le corps récepteur (21) sont mutuellement reliés à déplacement..

11. Système de clé (1) selon la revendication 9 ou 10, **caractérisé en ce que** le corps d'insertion (23) et le corps récepteur (21) sont mutuellement reliés au moyen d'une articulation (24).

12. Système de clé (1) selon l'une quelconque des revendications précédentes, **caractérisé en ce que** la clé de secours (3) est, dans la première position de crantage, logée sensiblement totalement dans le boîtier (2).

13. Système de clé (1) selon l'une quelconque des revendications précédentes, **caractérisé en ce que** la clé de secours (3) est, dans la deuxième position de crantage, logée dans le boîtier (2) dans une mesure telle que le corps récepteur (21) peut être atteint afin d'enfiler un anneau de clé.

14. Système de clé (1) selon l'une quelconque des revendications précédentes, **caractérisé en ce que** la clé de secours (3) est, dans la deuxième position de crantage, logée dans le boîtier (2) dans une mesure telle que le corps récepteur (21) peut être pivoté.

15. Système de clé (1) selon l'une quelconque des revendications précédentes, **caractérisé en ce que** la clé de secours (3) est, dans la deuxième position de crantage, logée dans le boîtier (2) dans une mesure telle que le corps récepteur (21) est pour l'essentiel logé dans le boîtier (2).

16. Système de clé (1) selon l'une quelconque des revendications précédentes, **caractérisé en ce que** la clé de secours (3) peut être insérée dans le boîtier (2) lorsque la deuxième position de crantage est débloquée.

17. Système de clé (1) selon l'une quelconque des revendications précédentes, **caractérisé en ce que** la clé de secours (3) peut être séparée du boîtier (2) lorsque la deuxième position de crantage est débloquée.

18. Système de clé (1) selon l'une quelconque des revendications précédentes, **caractérisé en ce qu'**il présente un bouton-poussoir (6) pour débloquer la deuxième position de crantage.

19. Système de clé (1) selon l'une quelconque des revendications précédentes, **caractérisé en ce que** le boîtier (2) présente un élément récepteur (32, 42, 52, 62) apte à recevoir un anneau de clé (33, 45, 56, 65).

20. Système de clé. (1) selon la revendication 19, **caractérisé en ce que** l'élément récepteur (32, 42, 52, 62) est relié à déplacement au boîtier (2) et peut être disposé au moins dans une position de fermeture, dans laquelle l'élément récepteur (32, 42, 52, 62) forme une unité fermée avec le boîtier (2), et dans une position d'enfilage dans laquelle un anneau de clé (33, 45, 56, 65) peut être enfilé dans l'élément récepteur (32, 42, 52, 62).

21. Système de clé (30, 40, 50, 60) pour un véhicule, avec une unité électronique émettrice disposée dans un boîtier (2) pour le verrouillage et/ou le déverrouillage sans contact d'une porte du véhicule et/ou pour le fonctionnement du véhicule, **caractérisé en ce que** le boîtier (2) présente un élément récepteur (32, 42, 52, 62) apte à recevoir un anneau de clé (33, 45, 56, 65), élément qui est relié à déplacement au boîtier (2) et peut être disposé au moins dans une position de fermeture, dans laquelle l'élément récepteur (32, 42, 52, 62) forme une unité fermée avec le boîtier (2), et dans une position d'enfilage dans laquelle un anneau de clé (33, 45, 56, 65) peut être enfilé dans l'élément récepteur (32, 42, 52, 62).

22. Système de clé (30, 40, 50, 60) selon la revendication 21, **caractérisé en ce qu'**il présente une clé de secours (3) pour, de façon mécanique, verrouiller et/ou déverrouiller la porte du véhicule et/ou faire fonctionner le véhicule, sachant que la clé de secours (3) peut être logée au moins en partie dans le boîtier (2).

23. Système de clé (30, 40, 50, 60) selon la revendication 21 ou 22, **caractérisé en ce que** la clé de secours (3) peut être logée sensiblement totalement dans le boîtier (2).
